# EUROPEAN PATENT SPECIFICATION

(11) **EP 2 613 399 B1**
(45) Date of publication and mention of the grant of the patent: **04.07.2018**
(21) Application number: 11822064.9
(22) Date of filing: 19.08.2011
(51) Int. Cl.: H01M 10/48, H01M 10/613, H01M 10/42, H01M 10/6563

(54) **COOLING CONTROL APPARATUS AND METHOD FOR BATTERY PACK**
VORRICHTUNG UND VERFAHREN ZUR STEUERUNG DER ABKÜHLUNG EINER BATTERIE
APPAREIL DE COMMANDE DE REFROIDISSEMENT ET PROCÉDÉ POUR BLOC BATTERIE

(30) Priority: 30.08.2010 KR 20100084145
(43) Date of publication of application: 10.07.2013
(73) Proprietor: LG Chem, Ltd., Youngdungpo-gu Seoul 150-721 (KR)
(72) Inventor: JIN, Chang-Eon, Daejeon 305-340 (KR)
(74) Representative: Cabinet Plasseraud
(86) International application number: PCT/KR2011/006134
(87) International publication number: WO 2012/030089

(56) References cited:
- JP-A- 2002 276 362
- JP-A- 2003 178 815
- JP-A- 2006 185 788
- JP-A- 2008 282 794
- JP-A- 2010 161 904
- KR-A- 19980 078 357
- US-A1- 2006 172 188
- US-A1- 2006 259 817

## Description

### TECHNICAL FIELD

The present invention relates to an apparatus and method for diagnosing and controlling the cooling system of a battery pack, and more particularly, to an apparatus and method for cooling control of a secondary battery pack used as a driving source of electric vehicles (EV), hybrid electric vehicles (HEV) or the like, which can apply a differential cooling method depending on temperature conditions of the secondary battery pack and can minimize a risk to a fault of the cooling system.

### BACKGROUND ART

A secondary battery has high applicability depending on the product group and excellent electrical characteristics such as high energy density, and thus is commonly used as an electric power source of electric vehicles (EV) or hybrid vehicles (HV) as well as mobile devices.

Such a secondary battery significantly reduces the use of the fossile fuels and does not generate by-products that come with energy consumption, and thus can improve energy efficiency. For these reasons, a secondary battery is gaining attention as an alternative energy source.

A battery pack, which is used for electric vehicles, conventionally includes a plurality of assemblies consisting of a plurality of unit cells. The cell includes a positive current collector, a separator, an active material, a liquid electrolyte, an aluminum thin film layer, etc., so that the structure is capable of charging/discharging by an electrochemical reaction between components.

In addition to the fundamental structure for charging/discharging, the battery pack further includes a device for physical protection of cells assembling to become a battery, various sensing means and a firmware, in which an accurate algorithm is applied to estimate a state of charge (SOC), etc.

A battery assembled of various chemical elements and electrophysical elements may not be permanently used due to the fundamental characteristics of an electrochemical reaction. Also, there are problems to be solved for a battery swelling due to an electrochemical reaction and a leakage current generated to adversely affect the safety and stability of the battery.

Fundamental properties of the battery, such as electrochemical and electrophysical properties, are affected by environmental conditions in which the battery is used. According to the external exposure environments of the battery, electrochemical properties inherent in the battery may be rapidly changed to greatly affect the lifetime, stability and operation performance of the battery.

Particularly, since the charging and discharging process of secondary batteries is conducted by an electrochemical reaction as mentioned above, the batteries are affected by surrounding environmental temperature conditions. For example, if the battery is charged and discharged in a severe temperature condition in which an optimum temperature has not been maintained, such as an extremely hot or cold temperature, a charging/discharging efficiency of the battery is reduced, which makes it difficult to assure normal operation performance.

The battery has an intrinsic attribute in that its electrophysical properties deteriorate over time and is susceptible to severe environmental conditions such as temperature, high current environment, physical impact, overcharging, overdischarging, submersion, high humidity or the like. If the battery is exposed in such an environment for a long period of time, its lifetime is rapidly shortened, its operation in a normal range is not assured for an optimum period and explosion may occur, thereby fatally affecting the safety of vehicles equipped with the battery.

Therefore, in order to maximize the stable and normal operation of the battery and optimize the economical efficiency thereof, there is a need to improve a user interface environment so that environmental factors such as a temperature of the battery reflect the operation control of the battery and any immediate and preliminary action is taken when the battery is exposed in a dangerous condition.

US2006259817 relates to a battery pack apparatus, a method for adjusting temperature of battery pack, a program product and a computer-readable recording medium, capable of reducing the noise and the vibration in the battery pack apparatus with a plurality of medium feeding parts to adjust a temperature thereof.

JP2006185788 relates to a battery cooling apparatus applied to a battery pack to eliminate a temperature difference and equalize the temperature of the entire battery module even when there is a temperature difference occurs in a battery module.

US2006172188 relates to a cooling device capable of sensing an anomaly in a supply air volume due to clogging of a filter provided in an air supply channel in a battery mounted on a vehicle or a foreign object, and a power supply including the same.

JP2010161904 relates to a drive control device for a cooling fan used to cool a secondary batteries, the drive control device enabling a stable drive of the cooling fan.

### DISCLOSURE

### Technical Problem

The present invention is designed to solve the problems of the prior art, and therefore, it is an aspect of the present invention to provide an apparatus and method for cooling control of a battery pack, which can apply a cooling control mechanism to minimize the influence of the battery by environmental conditions, particularly severe temperature conditions, and can improve a user interface environment to optimize the stable and normal operation of the battery.

Additional aspects and advantages will be apparent from the embodiments of the present invention. The aspects and advantages of the invention may be realized by means of instrumentalities and combinations particularly pointed out in the appended claims.

### Technical Solution

In order to accomplish the above object, the present invention provides an apparatus for cooling control of a battery pack according to independent claim 1, the apparatus including a temperature sensor for measuring the temperature of the battery pack; a blower module for introducing a cooling medium into the battery pack by means of fan operation; and a controller for controlling the operation of the blower module so that the cooling medium is introduced into the battery pack at a differential flow rate depending on temperature information input by the temperature sensor. The apparatus further includes a database (DB) unit for storing reference flow rate information of the cooling medium corresponding to the temperature of the battery pack; a flow rate sensor for measuring a flow rate of the cooling medium introduced into the battery pack; and an operation controller for controlling the use of the battery pack to be restricted when the flow rate information of the cooling medium on a current temperature of the battery pack deviates from the reference flow rate information on the basis of the temperature information of the battery pack, input by the temperature sensor, and the flow rate information of the cooling medium, input by the flow rate sensor.

Also, in the present invention, a plurality of blower modules may be provided and the controller may adjust the number of operated blower modules depending on the temperature information.

Furthermore, the present invention may further include a steering module for adjusting an introducing direction of the cooling medium. The temperature sensors may be provided in plurality at different positions of the battery pack and the controller may control the steering module so that the cooling medium is introduced in an amount relatively more in the direction of the temperature sensor indicative of a relatively higher temperature among the temperature sensors.

Here, the operation controller of the present invention may control the use of the battery pack to be restricted only in the case that the temperature information input by the temperature sensor after a reference time is not within the range of the reference temperature.

Furthermore, it is preferred that the present invention further includes a storage unit for storing at least one of the temperature information, the flow rate information, measuring time information and restricted time information at which the use of the battery pack is restricted.

Also, the operation controller may output risk information through an interface module when the flow rate information of the cooling medium on a current temperature of the battery pack deviates from the reference flow rate information, and in order to accomplish a more preferred embodiment of the present invention, the operation controller may output differential risk information depending on a degree that the flow rate information of the cooling medium on a current temperature of the battery pack deviates from the reference flow rate information, through an interface module.

Meanwhile, in order to accomplish an object according to the other aspect of the present invention, there is provided a method for cooling control of the battery pack according to independent claim 9.

### Advantageous Effects

The apparatus and method for cooling control of a battery pack according to the present invention can control the battery pack to be differentially cooled depending on a temperature condition environment in which the battery pack is exposed and depending on a partial or ununiform overheat of the battery pack, thereby achieving the more efficient cooling operation of the battery pack and, based on these, improving an efficiency in a proper application, lifespan extension, management, maintenance and the like for the battery.

In addition, it is possible to improve a user interface environment, thereby inducing to take a direct action such as the exchange and repair of a battery as well as a preliminary or protective action, to achieve a user-oriented battery control apparatus and method.

From the advantageous effects of the present invention, it is possible to enhance the lifespan of a battery and reduce unnecessary costs, thereby providing a more economical and enviroment-friendly battery. Also, an infrastructure for the automatic control of electric vehicles can be provided to achieve even greater development of electric vehicles.

### DESCRIPTION OF THE DRAWINGS

The accompanying drawings illustrate preferred embodiments of the present disclosure and, together with the foregoing disclosure, serve to provide further understanding of the technical spirit of the present disclosure. However, the present disclosure is not to be construed as being limited to the drawings.
FIG. 1 is a block diagram showing a configuration of an apparatus for cooling control of a battery pack according to a preferred embodiment of the present invention.
FIG. 2 is a perspective view showing a configuration of an apparatus for cooling control of a battery pack according to a preferred embodiment of the present invention.
FIG. 3 represents various temperature conditions and controlling factors corresponding thereto, which are used in a preferred embodiment of the present invention.
FIG. 4 represents data for adjusting an introducing direction of a cooling medium, which are used in a preferred embodiment of the present invention.
FIG. 5 is a flow chart illustrating the procedures of a method for cooling control of a battery pack according to a preferred embodiment of the present invention.
FIG. 6 represents differential control and differential information message output depending on the status of an apparatus for cooling a battery pack according to a preferred embodiment of the present invention.

### BEST MODE

Hereinafter, preferred embodiments of the present invention will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

Therefore, the description proposed herein is just a preferable example for the purpose of illustrations only, not intended to limit the scope of the invention, so it should be understood that other equivalents and modifications could be made thereto without departing from the spirit and scope of the invention.

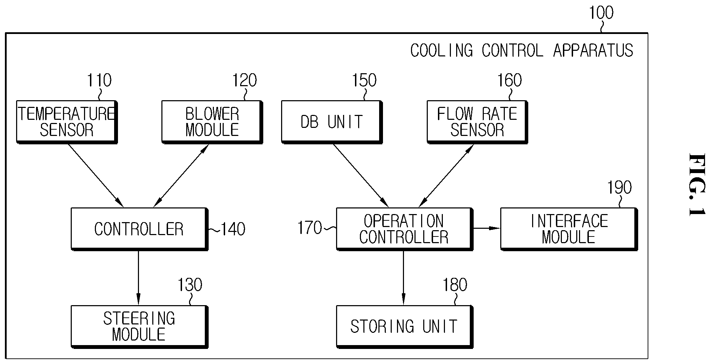

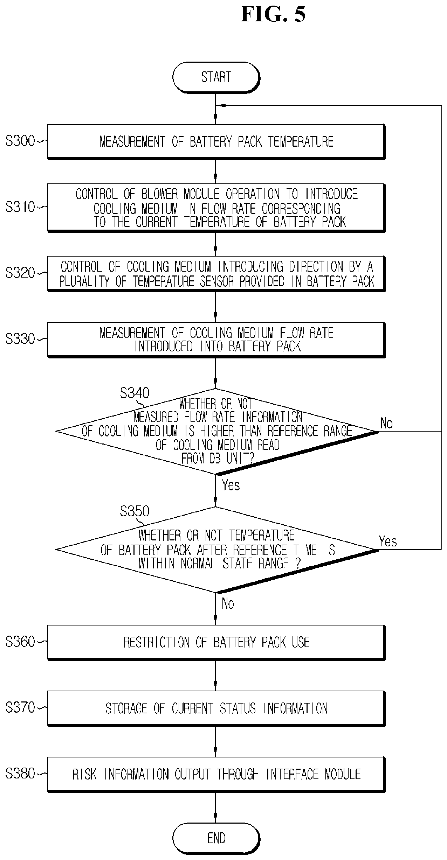

FIG. 1 is a block diagram showing a configuration of an apparatus for cooling control of a battery pack (hereinafter, refers as 'control apparatus') 100 according to a preferred embodiment of the present invention, and FIG. 5 is a flow chart illustrating the procedures of a method for cooling control of a battery pack according to a preferred embodiment of the present invention. The control apparatus and method according to a preferred embodiment of the present invention will be described in detail with reference to FIGs. 1 and 5.

As shown in FIG. 1, the control apparatus 100 of the present invention may include a temperature sensor 110, a blower module 120, a steering module 130, a controller 140, DB unit 150, a flow rate sensor 160, an operation controller 170, a storing unit 180 and an interface module 190.

The temperature sensor 110 conducts a function of sensing a temperature for the current status of a battery, and the sensed temperature information is input into the controller 140 of the present invention. As described above, in order to achieve the optimized performance of the battery pack, it is preferred that the battery pack mounted in electric vehicles is maintained in its proper operation temperature by a cooling air-conditioning system.

The blower module 120 of the present invention, which is part of the cooling air-conditioning system, is a component for introducing a cooling medium (such as air) into the battery pack by means of fan operation to maintain the temperature of the battery pack in a consistent optimum level.

Thus, if temperature information for the current status of the battery is measured by the temperature sensor 110 (S300), the controller 140 of the present invention controls the blower module 120 to introduce the cooling medium into the battery pack, and more specifically, controls the operation of the blower module 120 so that the cooling medium is introduced into the battery pack at a differential flow rate depending on such temperature information (S310).

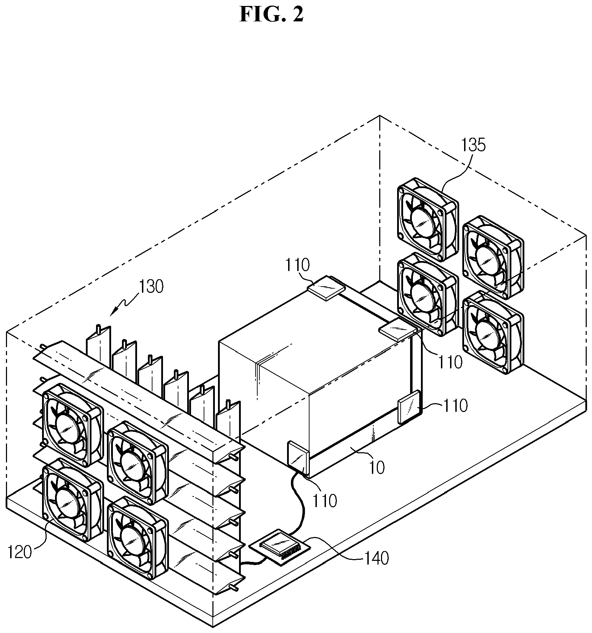

As shown in FIG. 2 illustrating one embodiment of the present invention, the controller 140 of the present invention operates the blower module 120 provided in the front end of the battery pack to introduce the cooling medium into the battery pack 10 and to cool heat generated by various causes including a charging and discharging process, thereby assuring the normal operation of the battery. As shown in FIG. 2, in order to increase an exhaust of warmed air to obtain more efficient air-conditioning system, it is more preferred to further include an exhaust blower module 135.

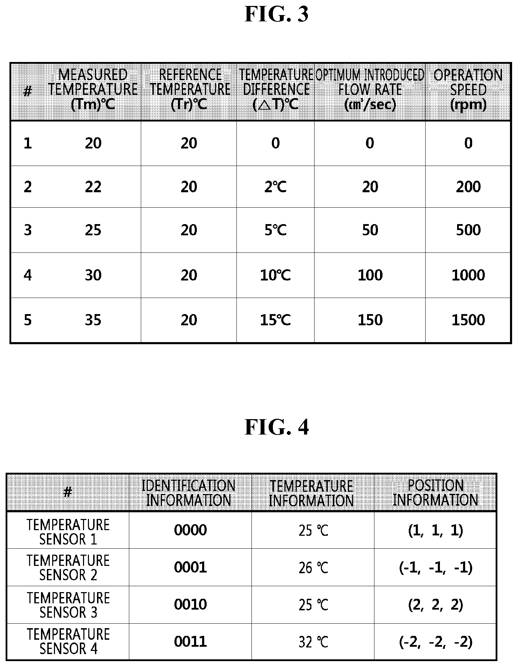

The differential operation of the controller 140 according to one embodiment of the present invention will be described in detail with reference to FIG.3 as follows.

A reference temperature (Tr) established for the normal operation of the battery pack is premised to 20 °C. The reference temperature, of course, has various values depending on a size and specification of the battery pack, the number of constructed secondary batteries, instruments environment mounted in electric vehicles or the like.

FIG. 3 represents a look-up table which is stored in a pre-determined storing medium to be referred automatically by the controller 140 of the present invention, thereby allowing an operation control depending on temperature conditions.

If the temperature information (Tm) measured by the temperature sensor 110 represents 25 °C, the difference between Tm and 20 °C established as the optimum reference temperature is 5 °C and, in order for the cooling medium to be introduced in a flow rate (20 cm³/sec) corresponding to such a temperature difference, the controller 140 of the present invention controls the operation voltage of the blower module 120 so that the operation speed of the blower module 120 is 200 rpm.

As for other example, if a current temperature of the battery pack is 35 °C (Δ T= 15), the cooling medium should be introduced in a relatively higher flow rate since the current temperature is higher as compared to the example described above. Therefore, the controller 140 of the present invention controls the operation voltage of the blower module 120 to be increased so that the operation speed of the blower module 120 is 1500 rpm.

Also, if a current temperature measured is 20 °C, the operation of the blower module 120 is controlled to turn off since there is no difference from the reference temperature.

Thus, in order to maintain the optimum temperature of the battery pack, the blower module 120 is differentially controlled and selectively operated as needed so that the higher current temperature of the battery pack allows the higher flow rate of the cooling medium to be introduced into the battery pack 10, thereby providing a more economical and optimized cooling control apparatus.

The data on the optimum flow rate of the cooling medium introduced, the operation speed of the blower module, the relative extent for the operation voltage of the blower module and the like may be pre-determined by an experiment in consideration of external environment such as a specification of the battery pack.

In addition, the data on the numerical values is just for the purpose of illustration only and should not be understood as absolute criteria, which may also be applied in a method for determining a reference as one numerical value or a certain range, as shown in FIG. 3.

In order to improve energy efficiency and the cooling efficiency of the battery pack simultaneously, the blower module 120 of the present invention may be provided in plurality, and the controller 140 of the present invention may operate a plurality of blower modules 120 so that the numbers of operated blower modules 120 is controlled differentially depending on current temperature information.

If a current temperature is not significantly different from an optimum reference temperature among the plurality of the blower modules 120, only one blower module is operated. As the current temperature is relatively higher, the number of operated blower modules 120 is increased to introduce the cooling medium in a higher flow rate into the battery pack.

Such a configuration can reduce any risks due to overheat of the blower module 120 as compared to the case only one blower module 120 is used to control its speed as well as reduce noise or vibration due to high speed rotation.

Meanwhile, the battery pack is in the form of aggregating a certain assembly consisting of a plurality of secondary unit cells and may include a module such as battery management system (BMS) consisting of electronic devices for controlling the battery pack, and a component for electrically connecting between electrodes.

The battery pack including such internal configuration may not have a uniform temperature distribution due to various causes such as ununiform SOC (state of charge) between a plurality of secondary batteries, BMS control status, difference of insulation resistance between electrodes, partial swelling generation. That is, such causes may relatively overheat a certain part of the battery pack 10 than other parts thereof to form a higher temperature distribution.

Based on this phenomenon, it is preferred to normally maintain the overall operation performance of the battery pack 10 and induce more efficient energy application.

For this, the present invention provides a plurality of temperature sensors 110 at different positions from each other so as to sense temperature informations of areas different from each other.

When the temperature information of a plurality of areas are sensed, the sensed temperature information are input into the controller 140 of the present invention, as mentioned above. The controller 140 of the present invention compares a plurality of the temperature information and controls the introducing direction of the cooling medium so that an amount relatively more of the cooling medium is introduced in the direction provided with the temperature sensor indicative of a relatively higher temperature (S320).

In order to efficiently achieve this step, as shown in FIG.2, a steering module 130 being capable of adjusting the direction of the cooling medium is provided, and the controller 140 controls the direction of the steering module 130 so that the cooling medium may be relatively concentrated at a certain position of the battery pack 10.

The steering module 130 may be independently operated in up-and-down or left- and-right direction, and in order to enhance a correlation with the plurality of the blower modules 120, it is more preferred that the steering module 130 is independently provided in each of the blower modules 120.

In accordance with such configuration, it is possible to introduce the cooling medium into the battery pack 10 to maintain an optimum temperature, by adjusting to introduce an even greater amount of the cooling medium into the area having a relatively higher temperature in the battery pack, thereby providing a more efficient cooling control apparatus.

Thus, the method for differentially introducing the cooling medium into each certain areas in which the temperature sensors are respectively provided is applicable in various manners, known to those of ordinary skill in the art, including the adjustment of direction and flow rate.

In one embodiment illustrating such method, as shown in FIG. 4, the position information of the temperature sensor is pre-stored in connection with the identification information of the relevant temperature sensor and is transmitted together with the identification information of the relevant temperature sensor on the transmission of the temperature information thereof. The controller 140 of the present invention may identify the identification information of the temperature sensor during identifying and analyzing the temperature information and adjust the direction of the steering module so that an introducing direction of the cooling medium is adjusted into the identified position of the temperature sensor.

The direction adjustment of the steering module is preferably conducted by using a stepper motor so as to enhance the accuracy of the direction adjustment.

Hereinafter, as another preferred embodiment of the present invention, an embodiment for the operation control of the battery and a user interface will be described in detail.

The DB unit 150 of the present invention stores reference flow rate information of the cooling medium corresponding to the temperature of the battery pack. The reference flow rate information may determine a flow rate of the cooling medium which should be introduced at a current temperature of the battery pack so as to maintain an optimum temperature of the battery pack.

That is, as shown in FIG. 3, if a current temperature information represents 22 °C, the cooling medium should be introduced in a flow rate of 20 cm³/sec so as to maintain the optimum temperature of 20 °C, and if a current temperature information represents 35 °C, the cooling medium should be introduced in a flow rate of 150 cm³/sec so as to maintain the optimum temperature of 20 °C. Thus, the reference flow rate information is the flow rate information of the cooling medium which is required to maintain the optimum temperature of the battery pack.

The reference flow rate information may also be varied depending on a specification, installed or mounted environment, stable operation criterion or the like in a level known to those of ordinary skill in the art.

As mentioned above, the rotation operation of the blower module 120 is differentially controlled correspondingly to the measured temperature, and for this, the operation voltage provided in the blower module 120 is differentially controlled.

The rotation speed of the blower module 120 may be determined based on a reference flow rate information (an optimum flow rate) required to maintain the optimum temperature. Based on such information, a signal is input into the blower module 120 from the controller 140. However, an intended flow rate of the cooling medium may not be introduced or the cooling medium itself may not be introduced by various causes such as rotation hindrance due to a fault of the blower module itself, fan damage, surrounding dust and foreign substances.

Accordingly, in order to efficiently reflect the problem generated in a cooling system such as the blower module 120 in the operation control of the battery pack and a user interface, in the present invention, a flow rate sensor 160 is provided in the battery pack to measure a flow rate of the cooling medium actually introduced into the battery pack (S330).

The flow rate sensor 160 may be in the form of a fan and functionally convert the rotation number, rotated by the cooling medium introduced, per a unit time. Or, it may be in other various forms which can measure a flow rate of the cooling medium.

The flow rate information measured by the flow rate sensor 160 is input in the operation controller 170 of the present invention, and the operation controller 170 monitors and inspects whether the cooling medium is introduced in an actually intended flow rate into the battery pack on the basis of such information.

For this, the operation controller 170 compares the reference flow rate information corresponding to a current temperature read from the DB unit 150 with the measured flow rate information which is input from the flow rate sensor 160 (S340), and if the flow rate information of the cooling medium on the current temperature of the battery pack deviates from the reference flow rate information, since it is regarded that a fault is generated in the cooling system, the operation controller 170 controls the use of the battery pack (S360).

If the blower module 120 according to the present invention rotates at a rotation speed corresponding to a current temperature to introduce the cooling medium in an optimum flow rate into the battery pack 10, the temperature information input from the temperature sensor 110 may be expected to be lowered over time to an optimum temperature level.

In the case of extensively applying such method, it is possible to data-process the time required for time information required to be lowered to an optimum temperature level through an experiment and a statistical process thereof Herein, a reference time means an information on the time required for time information to be lowered to the optimum temperature level, as mentioned above.

In order to efficiently use the reference time to accurately check an actual fault and reflect the operation control of the battery pack, even if the reference time has been elapsed, when the temperature information input from the temperature sensor 110 deviates from the range of the reference temperature, i.e., it is not lowered to the reference temperature, the operation controller 170 of the present invention may control the use of the battery pack to be restricted (S350).

That is, even though a predetermined reference time has been elapsed, if the temperature of the battery pack is not lowered to an optimum level to deviate from the range of a reference temperature, it is regarded that there is an actual fault in the cooling system and a risk for the stable operation of the battery pack. Under this circumstance, the operation controller 170 of the present invention conducts a process for restricting the use of the battery pack, as mentioned above.

An embodiment for restricting the use of the battery pack may be provided in various manners known to those of ordinary skill in the art, for example, a method of turning the power supply relay off so that the battery pack is not used, a method of partially restricting charge or discharge or restricting the function of the battery pack as a power source so that the battery pack operates only within a certain reference value based on SOC (stage of charge), output voltage, or the like, a method of selectively inactivating only certain battery pack in the case of electric vehicles consisting of a plurality of battery packs, a method of operating only gasoline engine as a power source in the case of hybrid vehicles, etc.

Also, in order to conduct a function such as a black box to use as history data, it is more preferred to store in a memory unit 180 at least one of measured temperature information, flow rate information, measured time information and time information at which the use of battery pack is restricted (S370).

In addition, if the flow rate information corresponding to a current temperature of the battery pack deviates from the reference flow rate information or the reference temperature range during the reference time, it is more preferred that the operation controller 170 of the present invention outputs risk information thereon into a pre-determined interface module 190 (S380) to provide to a driver or a user.

The interface module 190 may be in the form of a visual (display device such as LCD) or auditory (audio unit such as speaker) medium.

In order to accomplish a more preferred embodiment, it is more preferred that the operation controller 170 of the present invention outputs differential risk information into an interface module depending on a degree that the flow rate information corresponding to a current temperature of the battery pack deviates from the reference flow information.

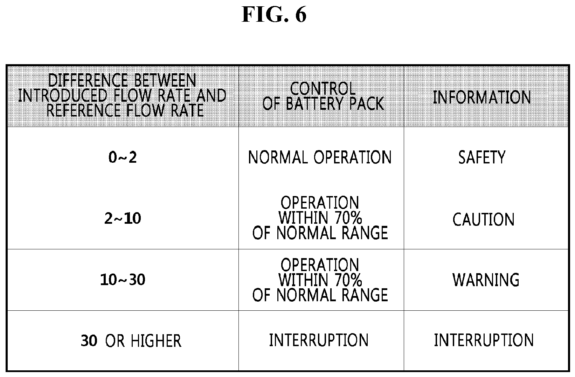

Such differential risk information may, as shown in FIG. 6, for example, information indicative of emergency situation that the actual operation of a battery is expected to be immediately interrupted or information indicative of a risk level for warning to a user may be variously provided.

According to such an interfacing process, a user can recognize whether there is a problem of a cooling system, the magnitude of the problem or risk level thereof and take preliminary or immediate action, so user convenience is provided and the safety accident of a battery is protected.

### INDUSTRIAL APPLICABILITY

The present disclosure has been described in detail. However, it should be understood that the detailed description, specific examples and drawings, while indicating preferred embodiments of the disclosure, are given by way of illustration only, since various changes and modifications within the scope of the disclosure will become apparent to those skilled in the art from this detailed description.

Meanwhile, each component of the cooling apparatus 100 of the present invention shown in FIG. 1 should be understood as a logic component, rather than a physically distinguishable component.

In other words, each component corresponding to an element logically distinguished for realizing the present invention, so each component should be understood as being included in the scope of the present invention if it may realize its logic function though it is separately implemented or integrated with another component, and components realizing their same or similar function should be understood as being included in the scope of the present invention even though their designations are different.

## Claims

1. An apparatus for cooling control of a battery pack, the apparatus comprising:
a temperature sensor (110) for measuring the temperature of the battery pack;
a blower module (120) for introducing a cooling medium into the battery pack by means of fan operation;
a controller (140) for controlling the operation of the blower module (120) so that the cooling medium is introduced into the battery pack at a differential flow rate depending on temperature information input by the temperature sensor (110);
**characterized in that** the apparatus further comprises:
a database (DB) unit for storing reference flow rate information of the cooling medium corresponding to the temperature of the battery pack;
a flow rate sensor (160) for measuring a flow rate of the cooling medium introduced into the battery pack; and
an operation controller (170) for controlling the use of the battery pack to be restricted when the flow rate information of the cooling medium on a current temperature of the battery pack deviates from the reference flow rate information on the basis of the temperature information of the battery pack, input by the temperature sensor (110), and the flow rate information of the cooling medium, input by the flow rate sensor (160).

2. The apparatus for cooling control of a battery pack according to claim 1, wherein the controller (140) controls the rotation speed of the blower module (120) to be adjusted depending on the temperature information.

3. The apparatus for cooling control of a battery pack according to claim 1, wherein the blower module (120) is provided in plurality, and the controller (140) adjusts the number of operated blower modules (120) depending on the temperature information.

4. The apparatus for cooling control of a battery pack according to claim 1, further comprising a steering module (130) for adjusting an introducing direction of the cooling medium,
wherein the temperature sensor (110) is provided in plurality at different positions of the battery pack, and
wherein the controller (140) controls the steering module (130) so that the cooling medium is introduced in an amount relatively more in the direction of the temperature sensor (110) indicative of a relatively higher temperature among the temperature sensors (110).

5. The apparatus for cooling control of a battery pack according to claim 1, wherein the operation controller (170) controls the use of the battery pack to be restricted only in the case that the temperature information input by the temperature sensor (110) after a reference time is not within the range of the reference temperature.

6. The apparatus for cooling control of a battery pack according to claim 5, further comprising a storage unit (180) for storing at least one of the temperature information, the flow rate information, measuring time information and restricted time information at which the use of the battery pack is restricted.

7. The apparatus for cooling control of a battery pack according to claim 1, wherein the operation controller (170) outputs risk information through an interface module (190) when the flow rate information of the cooling medium on a current temperature of the battery pack deviates from the reference flow rate information.

8. The apparatus for cooling control of a battery pack according to claim 7, wherein the operation controller (170) outputs differential risk information depending on a degree that the flow rate information of the cooling medium on a current temperature of the battery pack deviates from the reference flow rate information, through the interface module (190).

9. A method for cooling control of a battery pack, the method comprising:
measuring (S300) the temperature of the battery pack by a temperature sensor;
controlling (S310) the operation of a blower module introducing a cooling medium into the battery pack by means of fan operation so that the cooling medium is introduced into the battery pack at a differential flow rate depending on temperature information input by the temperature sensor; **characterized in that** the method further comprises:
measuring (S330) a flow rate of the cooling medium introduced into the battery pack by a flow rate sensor; and
operation controlling (S360) for restricting the use of the battery pack when the flow rate information of the cooling medium on a current temperature of the battery pack deviates from the reference flow rate information on the basis of the temperature information of the battery pack, input by the temperature sensor, and the flow rate information of the cooling medium, input by the flow rate sensor.

10. The method for cooling control of a battery pack according to claim 9, wherein in the control step, the rotation speed of the blower module is adjusted depending on the temperature information.

11. The method for cooling control of a battery pack according to claim 9, wherein the blower module is provided in plurality, and in the control step, the number of operated blower modules is adjusted depending on temperature information.

12. The method for cooling control of a battery pack according to claim 9, further comprising adjusting (S320) an introducing direction of the cooling medium by a steering module,
wherein the temperature sensor is provided in plurality at different positions of the battery pack, and
wherein in the control step, the steering module is controlled so that the cooling medium is introduced in an amount relatively more in the direction of the temperature sensor indicative of a relatively higher temperature among the temperature sensors.

13. The method for cooling control of a battery pack according to claim 9, wherein in the operation controlling step, the use of the battery pack is restricted (S350) only in the case that the temperature information input by the temperature sensor after a reference time is not within the range of the reference temperature.

14. The method for cooling control of a battery pack according to claim 13, further comprising storing (S370) at least one of the temperature information, the flow rate information, measuring time information and restricted time information at which the use of the battery pack is restricted.

15. The method for cooling control of a battery pack according to claim 9, wherein the operation controlling step further includes outputting (S380) risk information through an interface module when the flow rate information of the cooling medium on a current temperature of the battery pack deviates from the reference flow rate information.

16. The method for cooling control of a battery pack according to claim 15, wherein in the information output step, differential risk information is output depending on a degree that the flow rate information of the cooling medium on a current temperature of the battery pack deviates from the reference flow rate information, through the interface module.

## Patentansprüche

1. Vorrichtung zur Kühlsteuerung eines Batteriepacks, wobei die Vorrichtung aufweist:
einen Temperatursensor (110) zum Messen der Temperatur des Batteriepacks;
ein Gebläsemodul (120) zum Einführen eines Kühlmediums in das Batteriepack mittels Gebläsebetrieb;
einen Controller (140) zum Steuern des Betriebs des Gebläsemoduls (120), so dass das Kühlmedium in das Batteriepack mit einer unterschiedlichen Strömungsrate eingeführt wird, die von vom Temperatursensor (110) eingegebener Temperaturinformation abhängig ist;
**dadurch gekennzeichnet, dass** die Vorrichtung ferner aufweist:
eine Datenbank-(DB)-Einheit zum Speichern von Referenzströmungsrateninformation des Kühlmediums entsprechend der Temperatur des Batteriepacks;
einen Strömungsratensensor (160) zum Messen einer Strömungsrate des in das Batteriepack eingeführten Kühlmediums; und
einen Betriebscontroller (170) zum Steuern der Benutzung des Batteriepacks als eingeschränkt, wenn die Strömungsrateninformation des Kühlmediums bei einer gegenwärtigen Temperatur des Batteriepacks von der Referenzströmungsrateninformation abweicht, auf der Basis der vom Temperatursensor (110) eingegebenen Temperaturinformation des Batteriepacks und der vom Strömungsratensensor (160) eingegebenen Strömungsrateninformation des Kühlmediums.

2. Die Vorrichtung zur Kühlsteuerung eines Batteriepacks nach Anspruch 1, wobei der Controller (140) die Drehzahl des Gebläsemoduls (120) so steuert, dass sie in Abhängigkeit von der Temperaturinformation eingestellt wird.

3. Die Vorrichtung zur Kühlsteuerung eines Batteriepacks nach Anspruch 1, wobei das Gebläsemodul (120) in einer Mehrzahl vorgesehen ist, und der Controller (140) die Anzahl von arbeitenden Gebläsemodulen (120) in Abhängigkeit von der Temperaturinformation einstellt.

4. Die Vorrichtung zur Kühlsteuerung eines Batteriepacks nach Anspruch 1, die ferner ein Lenkmodul (13) zum Einstellen einer Einführrichtung des Kühlmediums aufweist,
wobei der Temperatursensor (110) an mehreren unterschiedlichen Positionen des Batteriepacks vorgesehen ist, und
wobei der Controller (140) das Lenkmodul (130) so steuert, dass das Kühlmedium in einer relativ größeren Menge in der Richtung jenes Temperatursensors (110) eingeführt wird, der unter den Temperatursensoren (110) eine relativ höhere Temperatur anzeigt.

5. Die Vorrichtung zur Kühlsteuerung eines Batteriepacks nach Anspruch 1, wobei der Betriebscontroller (170), nur in dem Fall, in dem die vom Temperatursensor (110) eingegebene Temperaturinformation nach einer Referenzzeit nicht innerhalb des Bereichs der Referenztemperatur liegt, die Benutzung des Batteriepacks als eingeschränkt steuert.

6. Die Vorrichtung zur Kühlsteuerung eines Batteriepacks nach Anspruch 5, die ferner eine Speichereinheit (180) zum Speichern von zumindest einer der Temperaturinformation, der Strömungsrateninformation, Messzeitinformation und Einschränkungszeitinformation, in der die Benutzung des Batteriepacks eingeschränkt ist, aufweist.

7. Die Vorrichtung zur Kühlsteuerung eines Batteriepacks nach Anspruch 1, wobei der Betriebscontroller (170) Risikoinformation durch ein Schnittstellenmodul (190) ausgibt, wenn die Strömungsrateninformation des Kühlmediums bei einer gegenwärtigen Temperatur des Batteriepacks von der Referenzströmungsrateninformation abweicht.

8. Die Vorrichtung zur Kühlsteuerung eines Batteriepacks nach Anspruch 7, wobei der Betriebscontroller (170) durch das Schnittstellenmodul (190) unterschiedliche Risikoinformation in Abhängigkeit von dem Grad ausgibt, mit dem die Strömungsrateninformation des Kühlmediums bei einer gegenwärtigen Temperatur des Batteriepacks von der Referenzströmungsrateninformation abweicht.

9. Verfahren zur Kühlsteuerung eines Batteriepacks, wobei das Verfahren aufweist:
Messen (S300) der Temperatur des Batteriepacks mit einem Temperatursensor;
Steuern (S310) des Betriebs eines Gebläsemoduls, das ein Kühlmedium in das Batteriepack mittels Gebläsebetrieb einführt, so dass das Kühlmedium in das Batteriepack mit einer unterschiedlichen Strömungsrate eingeführt wird, die von vom Temperatursensor eingegebener Temperaturinformation abhängig ist;
**dadurch gekennzeichnet, dass** das Verfahren ferner aufweist:
Messen (S330) einer Strömungsrate des in das Batteriepack eingeführten Kühlmediums mit einem Strömungsratensensor; und
Betriebssteuern (S360) zum Einschränken der Benutzung des Batteriepacks, wenn die Strömungsrateninformation des Kühlmediums bei einer gegenwärtigen Temperatur des Batteriepacks von der Referenzströmungsrateninformation abweicht, auf der Basis der vom Temperatursensor eingegebenen Temperaturinformation des Batteriepacks und der vom Strömungsratensensor eingegebenen Strömungsrateninformation des Kühlmediums.

10. Das Verfahren zur Kühlsteuerung eines Batteriepacks nach Anspruch 9, wobei im Steuerschritt die Drehzahl des Gebläsemoduls in Abhängigkeit von der Temperaturinformation eingestellt wird.

11. Das Verfahren zur Kühlsteuerung eines Batteriepacks nach Anspruch 9, wobei das Gebläsemodul in einer Mehrzahl vorgesehen ist, und in dem Steuerschritt die Anzahl der arbeitenden Gebläsemodule in Abhängigkeit von der Temperaturinformation eingestellt wird.

12. Das Verfahren zur Kühlsteuerung eines Batteriepacks nach Anspruch 9, das ferner aufweist, eine Einführrichtung des Kühlmediums durch ein Lenkmodul einzustellen (S320),
wobei der Temperatursensor an mehreren unterschiedlichen Positionen des Batteriepacks vorgesehen ist, und
wobei im Steuerschritt das Lenkmodul derart gesteuert wird, dass das Kühlmedium in einer relativ größeren Menge in der Richtung jenes Temperatursensors eingeführt wird, der unter den Temperatursensoren eine relativ höhere Temperatur anzeigt.

13. Das Verfahren zur Kühlsteuerung eines Batteriepacks nach Anspruch 9, wobei im Betriebssteuerschritt die Benutzung des Batteriepacks nur in dem Fall eingeschränkt ist (S350), in dem die vom Temperatursensor eingegebene Temperaturinformation nach einer Referenzzeit nicht innerhalb des Bereichs der Referenztemperatur liegt.

14. Das Verfahren zur Kühlsteuerung eines Batteriepacks nach Anspruch 13, das ferner aufweist, zumindest eine der Temperaturinformation, der Strömungsrateninformation, von Messzeitinformation und Einschränkungszeitinformation, in der die Benutzung des Batteriepacks eingeschränkt ist, zu speichern (S370).

15. Das Verfahren zur Kühlsteuerung eines Batteriepack nach Anspruch 9, wobei der Betriebssteuerschritt ferner enthält, Risikoinformation durch ein Schnittstellenmodul auszugeben, wenn die Strömungsrateninformation des Kühlmediums bei einer gegenwärtigen Temperatur des Batteriepacks von der Referenzströmungsrateninformation abweicht.

16. Das Verfahren zur Kühlsteuerung eines Batteriepacks nach Anspruch 15, wobei im Informationsausgabeschritt durch das Schnittstellenmodul unterschiedliche Risikoinformationen in Abhängigkeit von einem Grad ausgegeben wird, mit dem die Strömungsrateninformation des Kühlmediums bei einer gegenwärtigen Temperatur des Batteriepacks von der Referenzströmungsrateninformation abweicht.

## Revendications

1. Appareil de commande de refroidissement d'un bloc batterie, l'appareil comprenant :
un capteur de température (110) pour mesurer la température du bloc batterie ;
un module soufflante (120) pour introduire un agent de refroidissement dans le bloc batterie au moyen d'un actionnement de ventilateur ;
un système de commande (140) pour commander l'actionnement du module soufflante (120) de manière à ce que l'agent de refroidissement soit introduit dans le bloc batterie à un débit différentiel en fonction des informations de température entrées par le capteur de température (110) ;
**caractérisé en ce que** l'appareil comprend en outre :
une unité de base de données (DB) pour stocker des informations de débit de référence de l'agent de refroidissement correspondant à la température du bloc batterie ;
un capteur de débit (160) pour mesurer un débit de l'agent de refroidissement introduit dans le bloc batterie ; et
un système de commande d'actionnement (170) pour commander l'utilisation du bloc batterie pour qu'elle soit restreinte lorsque les informations de débit de l'agent de refroidissement sur une température actuelle du bloc batterie s'écartent des informations de débit de référence sur la base des informations de température du bloc batterie, entrées par le capteur de température (110), et des informations de débit de l'agent de refroidissement, entrées par le capteur de débit (160).

2. Appareil de commande de refroidissement d'un bloc batterie selon la revendication 1, dans lequel le système de commande (140) commande la vitesse de rotation du module soufflante (120) pour l'ajuster en fonction des informations de température.

3. Appareil de commande de refroidissement d'un bloc batterie selon la revendication 1, dans lequel le module soufflante (120) est prévu en pluralité, et le système de commande (140) ajuste le nombre de modules soufflantes (120) actionnés en fonction des informations de température.

4. Appareil de commande de refroidissement d'un bloc batterie selon la revendication 1, comprenant en outre un module de direction (130) pour ajuster une direction d'introduction de l'agent de refroidissement,
dans lequel le capteur de température (110) est prévu en pluralité à différentes positions du bloc batterie, et
dans lequel le système de commande (140) commande le module de direction (130) de sorte que l'agent de refroidissement soit introduit dans une quantité relativement supérieure dans la direction du capteur de température (110) indiquant une température relativement supérieure parmi les capteurs de température (110).

5. Appareil de commande de refroidissement d'un bloc batterie selon la revendication 1, dans lequel le système de commande d'actionnement (170) commande l'utilisation du bloc batterie pour qu'elle soit restreinte uniquement dans le cas où les informations de température entrées par le capteur de température (110) après un temps de référence ne sont pas dans la plage de la température de référence.

6. Appareil de commande de refroidissement d'un bloc batterie selon la revendication 5, comprenant en outre une unité de stockage (180) pour stocker au moins une parmi les informations de température, les informations de débit, les informations de temps de mesure et les informations de temps restreint auxquelles l'utilisation du bloc batterie est restreinte.

7. Appareil de commande de refroidissement d'un bloc batterie selon la revendication 1, dans lequel le système de commande d'actionnement (170) émet des informations de risque à travers un module d'interface (190) lorsque les informations de débit de l'agent de refroidissement sur une température actuelle du bloc batterie s'écartent des informations de débit de référence.

8. Appareil de commande de refroidissement d'un bloc batterie selon la revendication 7, dans lequel le système de commande d'actionnement (170) émet des informations de risque différentiel en fonction d'un degré dont les informations de débit de l'agent de refroidissement sur une température actuelle du bloc batterie s'écartent des informations de débit de référence, à travers le module d'interface (190).

9. Procédé de commande de refroidissement d'un bloc batterie, le procédé comprenant :
la mesure (S300) de la température d'un bloc batterie par un capteur de température ;
la commande (S310) de l'actionnement d'un module soufflante introduisant un agent de refroidissement dans le bloc batterie au moyen d'un actionnement de ventilateur de sorte que l'agent de refroidissement soit introduit dans le bloc batterie à un débit différentiel en fonction des informations de température entrées par le capteur de température ;
**caractérisé en ce que** le procédé comprend en outre :
la mesure (S330) d'un débit de l'agent de refroidissement introduit dans le bloc batterie par un capteur de débit ; et
la commande d'actionnement (S360) pour restreindre l'utilisation du bloc batterie lorsque les informations de débit de l'agent de refroidissement sur une température actuelle du bloc batterie s'écartent des informations de débit de référence sur la base des informations de température du bloc batterie, entrées par le capteur de température, et des informations de débit de l'agent de refroidissement, entrées par le capteur de débit.

10. Procédé de commande de refroidissement d'un bloc batterie selon la revendication 9, dans lequel dans l'étape de commande, la vitesse de rotation du module soufflante est ajustée en fonction des informations de température.

11. Procédé de commande de refroidissement d'un bloc batterie selon la revendication 9, dans lequel le module soufflante est prévu en pluralité, et dans l'étape de commande, le nombre de modules soufflantes actionnés est ajusté en fonction des informations de température.

12. Procédé de commande de refroidissement d'un bloc batterie selon la revendication 9, comprenant en outre l'ajustement (S320) d'une direction d'introduction de l'agent de refroidissement par un module de direction,
dans lequel le capteur de température est prévu en pluralité à différentes positions du bloc batterie, et
dans lequel dans l'étape de commande, le module de direction est commandé de sorte que l'agent de refroidissement soit introduit dans une quantité relativement supérieure dans la direction du capteur de température indiquant une température relativement supérieure parmi les capteurs de température.

13. Procédé de commande de refroidissement d'un bloc batterie selon la revendication 9, dans lequel dans l'étape de commande d'actionnement, l'utilisation du bloc batterie est restreinte (S350) uniquement dans le cas où les informations de température entrées par le capteur de température après un temps de référence ne sont pas dans la plage de la température de référence.

14. Procédé de commande de refroidissement d'un bloc batterie selon la revendication 13, comprenant en outre le stockage (S370) d'au moins une parmi les informations de température, les informations de débit, les informations de temps de mesure et les informations de temps restreint auxquelles l'utilisation du bloc batterie est restreinte.

15. Procédé de commande de refroidissement d'un bloc batterie selon la revendication 9, dans lequel l'étape de commande d'actionnement comprend en outre l'émission (S380) d'informations de risque à travers un module d'interface lorsque les informations de débit de l'agent de refroidissement sur une température actuelle du bloc batterie s'écartent des informations de débit de référence.

16. Procédé de commande de refroidissement d'un bloc batterie selon la revendication 15, dans lequel dans l'étape d'émission d'informations, des informations de risque différentiel sont émises en fonction d'un degré dont les informations de débit de l'agent de refroidissement sur une température actuelle du bloc batterie s'écartent des informations de débit de référence, à travers le module d'interface.
